# EUROPEAN PATENT APPLICATION

(11) **EP 4 628 348 A1**
(43) Date of publication of application: **08.10.2025**
(21) Application number: 22967150.8
(22) Date of filing: 30.11.2022
(51) Int. Cl.: B60L 9/18, B61C 3/02

(54) **POWER SUPPLY SWITCHING DEVICE AND DRIVE CONTROL APPARATUS**

(71) Applicant: MITSUBISHI ELECTRIC CORPORATION, Chiyoda-ku Tokyo 100-8310 (JP)
(72) Inventor: SASADA, Hirohisa, Tokyo 100-8310 (JP); YAMASHITA, Yoshinori, Tokyo 100-8310 (JP); OTSUBO, Michio, Tokyo 100-8310 (JP); CHIBA, Yoshinori, Tokyo 100-8310 (JP); MAEKAWA, Yuya, Tokyo 100-8310 (JP)
(74) Representative: Witte, Weller & Partner Patentanwälte mbB
(86) International application number: PCT/JP2022/044151
(87) International publication number: WO 2024/116317

(57) **Abstract**

A power supply switching device (30) includes a switching circuit (31) that is connected to a first power conversion device (10) and a low-voltage power storage device (20) and forms an electrical path between the first power conversion device (10) and the low-voltage power storage device (20), a switch controller (32) that controls the switching circuit (31) to electrically disconnect the first power conversion device (10) and the low-voltage power storage device (20) from each other when power is supplied from the main power source (92) to the first power conversion device (10) and to electrically connect the first power conversion device (10) and the low-voltage power storage device (20) to each other when power supply from the main power source (92) to the first power conversion device (10) is stopped in a powered-on state of the railway vehicle.

## Description

### Technical Field

The present disclosure relates to a power supply switching device and a drive control apparatus.

### Background Art

A current collector mounted on an electric railway vehicle acquires power supplied externally via overhead lines, collector shoes, and the like, and a drive control apparatus drives an electric motor using the power supplied from the current collector, thereby enabling the electric railway vehicle to run. Some electric railway vehicles are capable of running even when external power supply is stopped. One example of this type of electric railway vehicle is disclosed in Patent Literature 1.

A railway vehicle disclosed in Patent Literature 1 includes a traction power conversion device that converts high-voltage alternating current (AC) power, acquired by a current collector and stepped down by a transformer, into traction AC power and supplies the traction AC power to a traction motor, an auxiliary power supply power conversion device that converts the high-voltage AC power into load AC power for supply to AC loads and into load direct current (DC) power for supply to DC loads, and a battery device. When power supply from the overhead lines is stopped, a traction DC-AC power converter included in the traction power conversion device converts DC power supplied from the battery device into traction AC power and supplies the traction AC power to the traction motor, thereby enabling the railway vehicle to run.

### Citation List

### Patent Literature

Patent Literature 1: Unexamined Japanese Patent Application Publication No. 2021-44978

### Summary of Invention

### Technical Problem

In the railway vehicle disclosed in Patent Literature 1, the battery device is connected between a traction AC-DC power converter and the traction DC-AC power converter of the traction power conversion device. An intermediate link voltage between the traction AC-DC power converter and the traction DC-AC power converter of the traction power conversion device is set to a high voltage, such as 700V. This requires use of a high-voltage-resistant battery device capable of withstanding the intermediate link voltage as the battery device. However, the higher voltage resistance causes the larger size of the battery device, thus posing the challenge that the railway vehicle disclosed in Patent Literature 1 needs to be equipped with a large-sized battery device.

The present disclosure is made in view of the above circumstances and an objective of the present disclosure is to provide a power supply switching device and a drive control apparatus that enable railway vehicles to run using a compact power storage device even when the external power supply is stopped.

### Solution to Problem

To achieve the above objective, the power supply switching device of the present disclosure includes a switching circuit and a switch controller. The switching circuit is connected to a first power conversion device and a low-voltage power storage device to form an electrical path between the first power conversion device and the low-voltage power storage device. The first power conversion device converts supplied power into power to be supplied to an electric motor that generates propulsion for a railway vehicle, and supplies the converted power to the electric motor. The low-voltage power storage device supplies power to a conversion control device that controls the first power conversion device, and discharges at a voltage lower than applied voltage that is applied to the first power conversion device when power is supplied from a main power source to the first power conversion device. The switch controller controls the switching circuit to electrically disconnect the first power conversion device and the low-voltage power storage device from each other when power is supplied from the main power source to the first power conversion device, and controls the switching circuit to electrically connect the first power conversion device and the low-voltage power storage device to each other when power supply from the main power source to the first power conversion device is stopped in a powered-on state of the railway vehicle.

### Advantageous Effects of Invention

When power supply from the main power source to the first power conversion device is stopped, the power supply switching device of the present disclosure electrically connects the first power conversion device and the low-voltage power storage device to each other. As a result of this connection, the first power conversion device converts power supplied from the low-voltage power storage device and supplies the converted power to the electric motor, thereby generating propulsion for the railway vehicle. Therefore, the compact power storage device usable as the low-voltage power storage device enables the railway vehicle to run even when external power supply is stopped.

### Brief Description of Drawings

FIG. 1 is a block diagram illustrating a configuration of a drive control apparatus according to Embodiment 1;
FIG. 2 is a diagram illustrating a circuit configuration of the drive control apparatus according to Embodiment 1;
FIG. 3 is a block diagram illustrating a configuration of a conversion control device according to Embodiment 1;
FIG. 4 is a block diagram illustrating a configuration of a first controller according to Embodiment 1;
FIG. 5 is a block diagram illustrating a hardware configuration of a switch controller and the conversion control device according to Embodiment 1;
FIG. 6 is a timing chart illustrating an example of an operation of the drive control apparatus according to Embodiment 1 when power is supplied from a main power source to a first power conversion device;
FIG. 7 is a diagram illustrating an example of a current flow in the drive control apparatus according to Embodiment 1 when power is supplied from the main power source to the first power conversion device;
FIG. 8 is a timing chart illustrating an example of an operation of the drive control apparatus according to Embodiment 1 when power supply from the main power source to the first power conversion device is stopped;
FIG. 9 is a diagram illustrating an example of a current flow in the drive control apparatus according to Embodiment 1 when power supply from the main power source to the first power conversion device is stopped;
FIG. 10 is a timing chart illustrating an example of an operation of the drive control apparatus according to Embodiment 1 when power supply from the main power source to the first power conversion device is resumed;
FIG. 11 is a diagram illustrating a circuit configuration of a drive control apparatus according to Embodiment 2;
FIG. 12 is a block diagram illustrating a configuration of a first controller according to Embodiment 2;
FIG. 13 is a flowchart illustrating an example of a protective operation process performed by the drive control apparatus according to Embodiment 2, based on an applied voltage;
FIG. 14 is a flowchart illustrating an example of a protective operation process performed by the drive control apparatus according to Embodiment 2, based on a voltage across terminals of a capacitor;
FIG. 15 is a flowchart illustrating an example of the protective operation process performed by the drive control apparatus according to Embodiment 2, based on a voltage difference between the applied voltage and the voltage across the terminals of the capacitor;
FIG. 16 is a flowchart illustrating an example of the protective operation process performed by the drive control apparatus according to Embodiment 2, based on a current value; and
FIG. 17 is a block diagram illustrating a modified example of the hardware configuration of a switch controller and a conversion control device according to an embodiment.

### Description of Embodiments

A power supply switching device and a drive control apparatus according to embodiments of the present disclosure are described in detail below with reference to the drawings. In the drawings, the same reference numerals denote the same or equivalent components.

### Embodiment 1

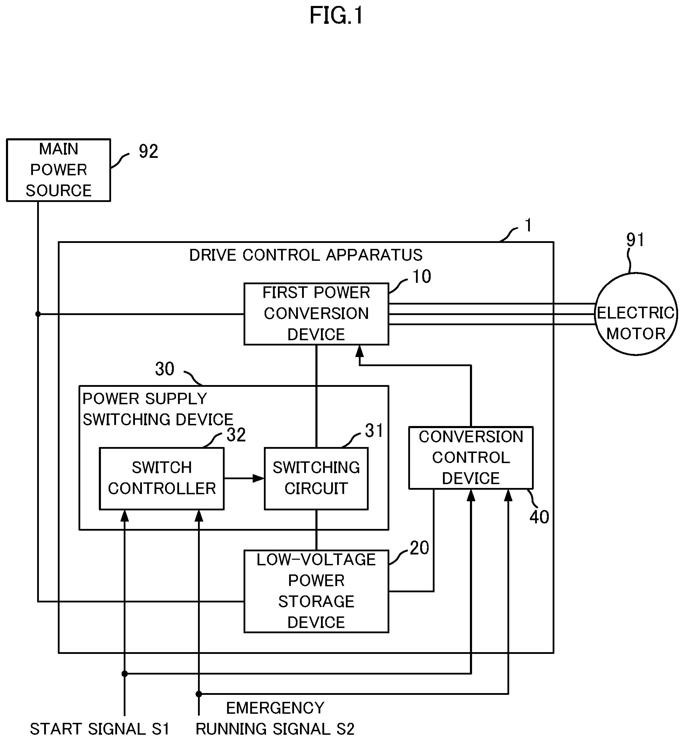

Embodiment 1 describes a drive control apparatus mounted on a railway vehicle using a DC electrification system. As illustrated in FIG. 1, a drive control apparatus 1 includes a first power conversion device 10 that converts DC power supplied from a main power source 92 into power, such as three-phase AC power, to be supplied to an electric motor 91 that generates propulsion for the railway vehicle, a low-voltage power storage device 20 charged by power supplied from the main power source 92, a power supply switching device 30 that forms an electrical path between the first power conversion device 10 and the low-voltage power storage device 20, and a conversion control device 40 that controls the first power conversion device 10.

The power supply switching device 30 and the conversion control device 40 receive, from a non-illustrated driver's cab, a start signal S1 that instructs startup of the railway vehicle and an emergency running signal S2 that instructs emergency running to use power stored in the low-voltage power storage device 20 for running when power supply from the main power source 92 is stopped.

The start signal S1 is a signal that is in a high (H) level at startup of the railway vehicle and in a low (L) level at stop of the railway vehicle. The emergency running signal S2 transitions to the H level when the railway vehicle runs while power supply from the main power source 92 to the first power conversion device 10 is stopped and transitions to the L level when running in a state where the first power conversion device 10 is supplied with power from the main power source 92.

The electric motor 91 is, for example, a three-phase induction motor. In FIG. 1, only one electric motor 91 is illustrated to avoid complexity, but the first power conversion device 10 supplies power to one or more electric motors 91.

The main power source 92 is a current collector that acquires power supplied from a substation via power supply lines. Examples of current collectors include pantographs that collect power from overhead lines and collector shoes that collect power from a third rail.

The power supply switching device 30 includes a switching circuit 31 that forms an electrical path between the first power conversion device 10 and the low-voltage power storage device 20, and a switch controller 32 that controls the switching circuit 31 to electrically disconnect or connect the first power conversion device 10 and the low-voltage power storage device 20 from or to each other.

The switch controller 32 controls the switching circuit 31 to electrically disconnect the first power conversion device 10 and the low-voltage power storage device 20 from each other when the railway vehicle is in a powered-off sate or when power is supplied to the first power conversion device 10 from the main power source 92. Specifically, the switch controller 32 controls the switching circuit 31 to electrically disconnect the first power conversion device 10 and the low-voltage power storage device 20 from each other when the start signal S1 is at the L level or when the start signal S1 is at the H level and the emergency running signal S2 is at the L level.

When power supply from the main power source 92 to the first power conversion device 10 is stopped in a powered-on state of the railway vehicle, the switch controller 32 controls the switching circuit 31 to electrically connect the first power conversion device 10 and the low-voltage power storage device 20 from each other. Specifically, the switch controller 32 controls the switching circuit 31 to electrically connect the first power conversion device 10 and the low-voltage power storage device 20 to each other when the start signal S1 is at the H level and the emergency running signal S2 is at the H level.

As a result, during emergency running, DC power is supplied from the low-voltage power storage device 20 to the first power conversion device 10. The first power conversion device 10 converts the DC power supplied from the low-voltage power storage device 20 into three-phase AC power and supplies the converted three-phase AC power to the electric motor 91. As a result, the electric motor 91 is driven to generate propulsion for the railway vehicle. As described above, the drive control apparatus 1 can drive the electric motor 91 to enable the railway vehicle to run, using the power discharged from the low-voltage power storage device 20 even when power supply from the main power source 92 to the first power conversion device 10 is stopped.

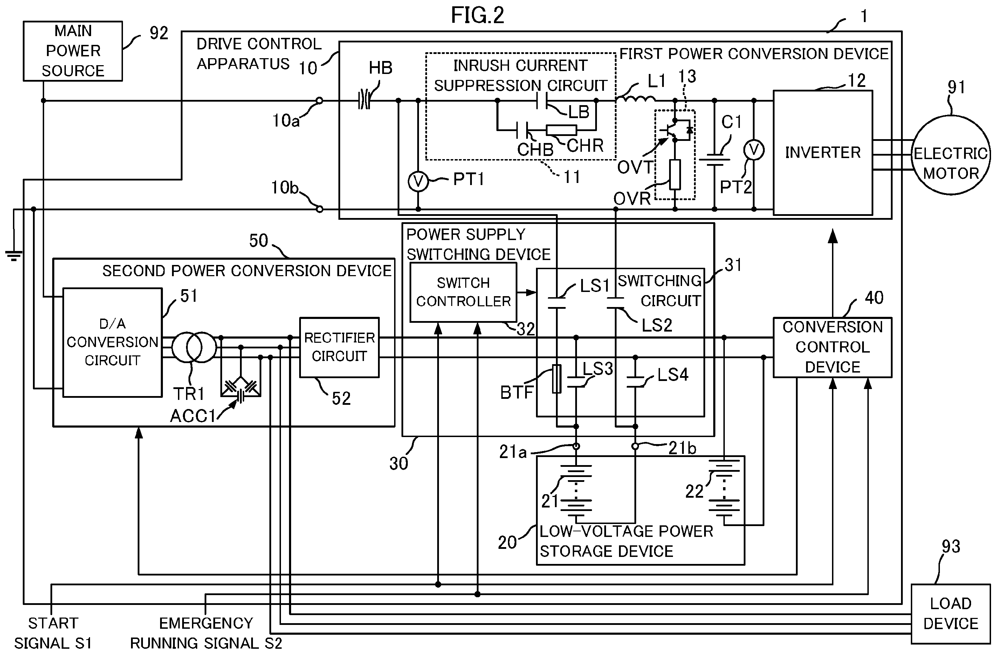

The details of each component of the drive control apparatus 1 are described with reference to FIG. 2. In the example illustrated in FIG. 2, the drive control apparatus 1 further includes, in addition to the components in FIG. 1, a second power conversion device 50 that converts DC power supplied from the main power source 92 into both DC and AC power and supplies the converted DC and AC power to the low-voltage power storage device 20 and the load device 93, respectively. The load device 93 is an electronic device installed on the railway vehicle, such as lighting equipment and an onboard device.

The first power conversion device 10 has a positive input terminal 10a that is a positive terminal on the main power source 92 side and a negative input terminal 10b that is a negative terminal on the main power source 92 side. The positive input terminal 10a is connected to the main power source 92 and the negative input terminal 10b is grounded.

The first power conversion device 10 includes a high-speed circuit breaker HB having one end connected to the main power source 92 via the positive input terminal 10a, an inrush current suppression circuit 11 to suppress inrush current, a reactor L 1 having one end connected to an output side of the inrush current suppression circuit 11, a capacitor C1 that, together with the reactor L1, forms an LC filter to reduce harmonic components, an inverter 12 to convert the DC power supplied via the capacitor C1 into three-phase AC power to supply to the electric motor 91, and a discharge circuit 13 connected in parallel with the capacitor C1.

The high-speed circuit breaker HB is controlled by the conversion control device 40. When the high-speed circuit breaker HB is closed, the inrush current suppression circuit 11 is electrically connected to the main power source 92. When the high-speed circuit breaker HB is opened, the inrush current suppression circuit 11 is electrically disconnected from the main power source 92.

The inrush current suppression circuit 11 includes a main contactor LB having one end connected to the high-speed circuit breaker HB and the other end connected to the reactor L1, and a charging contactor CHB and a charging resistor CHR connected in parallel with the main contactor LB and connected in series with each other. Both the main contactor LB and the charging contactor CHB are controlled by the conversion control device 40. When the main contactor LB or the charging contactor CHB is closed, the inverter 12 is electrically connected to the main power source 92 via the inrush current suppression circuit 11 and the high-speed circuit breaker HB, or the inverter 12 is electrically connected to the low-voltage power storage device 20 via the inrush current suppression circuit 11 and the switching circuit 31.

The inverter 12 is formed, for example, as a power conversion circuit with variable output voltage and variable output frequency. Specifically, the inverter 12 includes switching elements controlled by pulse width modulation signals output by the conversion control device 40, and freewheeling diodes connected in parallel with the respective switching elements. Through switching operations of the switching elements, the inverter 12 converts DC power supplied via the capacitor C1 connected between primary terminals, into three-phase AC power, and supplies the converted three-phase AC power to the electric motor 91 connected to secondary terminals.

Each switching element is an insulated gate bipolar transistor (IGBT), a gate turn-off thyristor (GTO), a metal-oxide-semiconductor field-effect transistor (MOSFET), or the like. When the switching element is an IGBT, the anode of the freewheeling diode is connected to the emitter terminal of the switching element, and the cathode of the freewheeling diode is connected to the collector terminal of the switching element.

Both the reactor L1 and the capacitor C1 form an LC filter to reduce harmonic components generated by the switching operations of the switching elements included in the inverter 12.

The capacitor C1 is connected between the primary terminals of the inverter 12 and is charged with the DC power supplied from the main power source 92 or the low-voltage power storage device 20.

The discharge circuit 13 includes a discharge resistor OVR and a discharge switch OVT connected in series with each other. The discharge switch OVT is controlled by the conversion control device 40. The discharge switch OVT, for example, includes an IGBT and a freewheeling diode connected in parallel with the IGBT. When the discharge switch OVT is closed, the capacitor C1 is electrically connected to the discharge resistor OVR, and the capacitor C1 is discharged.

The first power conversion device 10 is provided with a voltage sensor PT1 to measure a value of the voltage applied to the first power conversion device 10, as a voltage acquirer to acquire a value of the voltage applied to the first power conversion device 10. In addition, the first power conversion device 10 is further provided with a voltage sensor PT2 to measure a value of the voltage across the terminals of the capacitor C1, as a voltage acquirer to acquire the voltage across the terminals of the capacitor C1. The measurement values of the voltage sensors PT1 and PT2 are sent to the conversion control device 40. The measurement value of the voltage sensor PT2 is sent to the switch controller 32 of the power supply switching device 30.

The second power conversion device 50 includes a digital/analog (D/A) conversion circuit 51 with the circuit configuration similar to that of the first power conversion device 10, a transformer TR1 that transforms AC power output by the D/A conversion circuit 51 connected to a primary winding of the transformer TR1 and outputs the AC power from a secondary winding, an AC capacitor ACC1 connected to the secondary winding of the transformer TR1, and a rectifier circuit 52 that rectifiers the AC power transformed by the transformer TR1 into DC power.

The D/A conversion circuit 51 has a configuration similar to the first power conversion device 10, and specifically includes a high-speed circuit breaker HB, an inrush current suppression circuit 11, a reactor L1, an inverter 12, a capacitor C1, a discharge circuit 13, and voltage sensors PT1 and PT2. The inverter 12 included in the D/A conversion circuit 51 is a static inverter to maintain output voltage and output frequency constant.

The transformer TR1 is, for example, a delta-star connection type transformer, and transforms the AC power supplied by the D/A conversion circuit 51 connected to the primary winding into AC power with a voltage suitable for the load device 93 and outputs the transformed AC power from the secondary winding.

The AC capacitor ACC1 is connected to the secondary winding of the transformer TR1. Together with the coil of the transformer TR1, the AC capacitor ACC1 forms an LC filter to reduce harmonic components generated by switching operation of the inverter 12 included in the D/A conversion circuit 51.

The rectifier circuit 52 rectifies the AC power transformed by the transformer TR1 into DC power and supplies the rectified DC power to the low-voltage power storage device 20 and the conversion control device 40.

The low-voltage power storage device 20 discharges at a voltage lower than an applied voltage that is applied to the first power conversion device 10 when power is supplied from the main power source 92 to the first power conversion device 10. For example, the low-voltage power storage device 20 discharges at a voltage in the range of 10% or more to 20% or less of an applied voltage that is applied to the first power conversion device 10 when power is supplied from the main power source 92 to the first power conversion device 10. Specifically, when DC power of 750 V is supplied from the main power source 92 to the first power conversion device 10, the low-voltage power storage device 20 discharges DC power of 100 V.

The low-voltage power storage device 20 includes a first battery module 21 having a plurality of battery cells connected in series with each other, and a second battery module 22 having a plurality of battery cells connected in series with each other. The first battery module 21 and the second battery module 22 are independent of each other.

A positive battery terminal 21a that is a positive side terminal of the first battery module 21 and a negative battery terminal 21b that is a negative side terminal of the first battery module 21 are electrically connected, via the switching circuit 31, to the first power conversion device 10 or the second power conversion device 50 and the conversion control device 40. The first battery module 21 is charged with the DC power output by the second power conversion device 50.

The first battery module 21 is electrically connected to or disconnected from the first power conversion device 10 by the switch controller 32 controlling the switching circuit 31. When the first battery module 21 is electrically connected to the first power conversion device 10, the low-voltage power storage device 20 supplies the power stored in the first battery module 21 to the first power conversion device 10.

The second battery module 22 is electrically connected to the second power conversion device 50 and the conversion control device 40. Specifically, a positive side terminal of the second battery module 22 is connected to a point of connection between a positive output terminal of the second power conversion device 50 and a positive power supply terminal of the conversion control device 40. A negative side terminal of the second battery module 22 is connected to a point of connection between a negative output terminal of the second power conversion device 50 and a negative power supply terminal of the conversion control device 40. When power supply from the second power conversion device 50 to the conversion control device 40 is stopped, the low-voltage power storage device 20 supplies the power stored in the second battery module 22 to the conversion control device 40. Specifically, the second battery module 22 serves as a control power source for the conversion control device 40 during startup of the railway vehicle and during emergency running after the startup. The second battery module 22 is charged with the DC power output by the second power conversion device 50.

The switching circuit 31 is electrically connected to the first power conversion device 10, the first battery module 21 of the low-voltage power storage device 20, and the second power conversion device 50. The switching circuit 31 forms an electrical path between the first power conversion device 10 and the first battery module 21 of the low-voltage power storage device 20, and an electrical path between the second power conversion device 50 and the first battery module 21 of the low-voltage power storage device 20.

Specifically, the switching circuit 31 includes a first contactor LS1 and a second contactor LS2 as at least one power supply contactor electrically connected to the first power conversion device 10 and the low-voltage power storage device 20. The switching circuit 31 further includes a third contactor LS3 and a fourth contactor LS4 as at least one charging contactor electrically connected to the low-voltage power storage device 20 and the second power conversion device 50.

Preferably, the switching circuit 31 further includes a fuse BTF provided in the electrical path between the first power conversion device 10 and the low-voltage power storage device 20. When a current exceeding the rated current flows, the fuse BTF blows and electrically disconnects the first power conversion device 10 from the low-voltage power storage device 20. Inclusion of the fuse BTF suppresses overcurrent flowing to the low-voltage power storage device 20.

Details of the switching circuit 31 are described below. One end of the first contactor LS1 is connected to the positive input terminal 10a of the first power conversion device 10 via the high-speed circuit breaker HB. Specifically, one end of the first contactor LS1 is connected to the other end of the high-speed circuit breaker HB and a point of connection between one end of the main contactor LB and one end of the charging contactor CHB included in the inrush current suppression circuit 11. The other end of the first contactor LS1 is connected to the positive battery terminal 21a of the first battery module 21 via the fuse BTF.

One end of the second contactor LS2 is connected to the negative input terminal 10b of the first power conversion device 10. The other end of the second contactor LS2 is connected to the negative battery terminal 21b of the first battery module 21.

One end of the third contactor LS3 is connected to a point of connection between the positive output terminal that is a positive side output terminal of the second power conversion device 50 and the positive power supply terminal that is a positive side terminal of the conversion control device 40. The other end of the third contactor LS3 is connected to the positive battery terminal 21a of the first battery module 21.

One end of the fourth contactor LS4 is connected to a point of connection between the negative output terminal that is a negative side output terminal of the second power conversion device 50 and the negative power supply terminal that is a negative side terminal of the conversion control device 40. The other end of the fourth contactor LS4 is connected to the negative battery terminal 21b of the first battery module 21.

When the first contactor LS1 and the second contactor LS2 are closed, and the third contactor LS3 and the fourth contactor LS4 are opened, the first power conversion device 10 is electrically connected to the first battery module 21 of the low-voltage power storage device 20, thereby allowing the first battery module 21 to supply DC power to the first power conversion device 10.

When the first contactor LS1 and the second contactor LS2 are opened, and the third contactor LS3 and the fourth contactor LS4 are closed, the first power conversion device 10 is electrically disconnected from the first battery module 21 of the low-voltage power storage device 20, and the second power conversion device 50 and the conversion control device 40 are electrically connected to the first battery module 21 of the low-voltage power storage device 20. As a result, the low-voltage power storage device 20 can be charged with DC power output by the second power conversion device 50.

The switch controller 32 controls the first contactor LS1, the second contactor LS2, the third contactor LS3, and the fourth contactor LS4 based on the start signal S1, the emergency running signal S2, and the measurement values of the voltage sensor PT2.

Specifically, the switch controller 32 electrically disconnects the first power conversion device 10 and the first battery module 21 of the low-voltage power storage device 20 from each other by opening the first contactor LS1 and the second contactor LS2 when the start signal S1 is at the L level or when the start signal S1 is at the H level, and the emergency running signal S2 is at the L level. At this time, the switch controller 32 electrically connects the second power conversion device 50 and the conversion control device 40 to the first battery module 21 of the low-voltage power storage device 20 by closing the third contactor LS3 and the fourth contactor LS4.

The switch controller 32 electrically connects the first power conversion device 10 and the first battery module 21 of the low-voltage power storage device 20 each other by closing the first contactor LS1 and the second contactor LS2 when the start signal S 1 is at the H level and the emergency running signal S2 is at the H level. At this time, the switch controller 32 electrically disconnects the second power conversion device 50 and the conversion control device 40 from the first battery module 21 of the low-voltage power storage device 20 by opening the third contactor LS3 and the fourth contactor LS4.

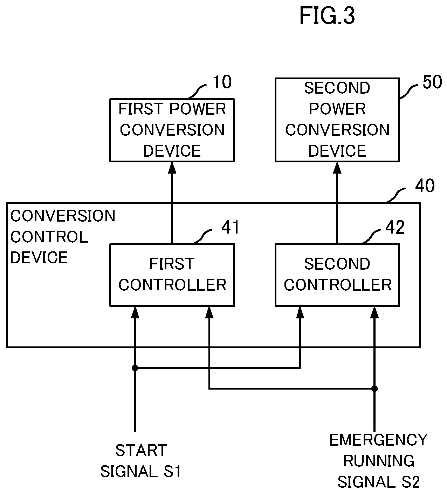

The conversion control device 40 controls the first power conversion device 10 and the second power conversion device 50 based on the start signal S1, the emergency running signal S2, and a non-illustrated operation command signal. The operation command signal is a signal output from the master controller provided in the driver's cab and indicates a target acceleration of the railway vehicle in accordance with the operation of the master controller. Specifically, as illustrated in FIG. 3, the conversion control device 40 includes a first controller 41 that controls the first power conversion device 10, and a second controller 42 that controls the second power conversion device 50.

The first controller 41 closes or opens the high-speed circuit breaker HB, the main contactor LB, and the charging contactor CHB in the first power conversion device 10, and switches on or off the discharge switch OVT and the switching elements of the inverter 12 in the first power conversion device 10. Similarly, the second controller 42 opens or closes the high-speed circuit breaker HB, the main contactor LB, and the charging contactor CHB of the D/A conversion circuit 51 in the second power conversion device 50, and switches on or off the discharge switch OVT and the switching elements of the inverter 12 in the D/A conversion circuit 51 in the second power conversion device 50.

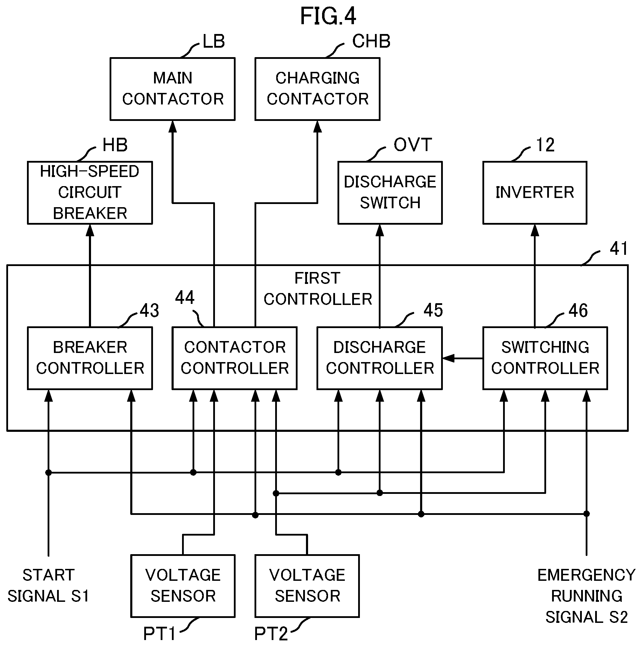

Since the configurations of the first controller 41 and the second controller 42 are similar, the details of the first controller 41 are described using FIG. 4. As illustrated in FIG. 4, the first controller 41 includes a breaker controller 43 that closes or opens the high-speed circuit breaker HB, a contactor controller 44 that closes or opens the main contactor LB and the charging contactor CHB, a discharge controller 45 that switches on or off the discharge switch OVT, and a switching controller 46 that switches on or off the switching elements of the inverter 12.

The breaker controller 43 closes or opens the high-speed circuit breaker HB based on the start signal S1 and the emergency running signal S2.

The contactor controller 44 acquires measurement values from the voltage sensors PT1 and PT2. The contactor controller 44 closes or opens the main contactor LB and the charging contactor CHB based on the start signal S1, the emergency running signal S2, and the measurement values of the voltage sensors PT1 and PT2.

The discharge controller 45 acquires a measurement value from the voltage sensor PT2 and pulse width modulation signals from the switching controller 46. The discharge controller 45 switches on or off the discharge switch OVT based on the start signal S1, the emergency running signal S2, the measurement value of the voltage sensor PT2, and the pulse width modulation signals.

The switching controller 46 acquires the measurement value from the voltage sensor PT2 and the operation command signal sent from the driver's cab. The switching controller 46 generates pulse width modulation signals to control the respective switching elements of the inverter 12 based on the start signal S1, the emergency running signal S2, the measurement value of the voltage sensor PT2, and the operation command signal. The switching controller 46 sends the pulse width modulation signals to the respective switching elements, thereby switching on or off the switching elements.

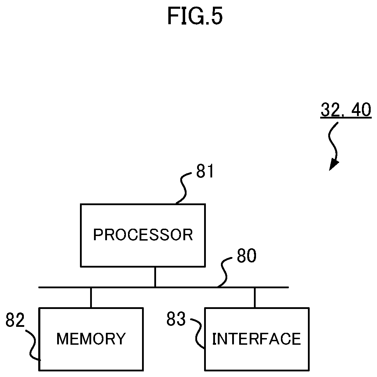

The hardware configuration of the control section of the drive control apparatus 1 with the above configuration, that is, the hardware configuration of the switch controller 32 and the conversion control device 40 are illustrated in FIG. 5. The switch controller 32 and the conversion control device 40 each include a processor 81, a memory 82, and an interface 83. The processor 81, the memory 82, and the interface 83 are connected to each other via a bus 80. The functions of the components of the switch controller 32 and the conversion control device 40 are implemented by software, firmware, or a combination of software and firmware. The software and firmware are described as programs and stored in the memory 82. The processor 81 reads and executes the programs stored in the memory 82, and thus achieves the above-described functions of the components. That is, the memory 82 stores programs for executing processing of the switch controller 32 or processing of each component of the conversion control device 40.

The memory 82 is, for example, a nonvolatile or volatile semiconductor memory such as a random-access memory (RAM), a read-only memory (ROM), a flash memory, an erasable programmable read only memory (EPROM), or an electrically erasable and programmable read only memory (EEPROM), or a magnetic disk, a flexible disk, an optical disc, a compact disc, a minidisc, or a digital versatile disc (DVD).

The switch controller 32 is connected via the interface 83 to the first contactor LS1, the second contactor LS2, the third contactor LS3, the fourth contactor LS4, and the voltage sensor PT2. The conversion control device 40 is connected via the interface 83 to the high-speed circuit breaker HB, the main contactor LB, the charging contactor CHB, the discharge switch OVT, the inverter 12, and the voltage sensors PT1 and PT2. The interface 83 includes an interface module complying with one or more standards as appropriate for connection targets.

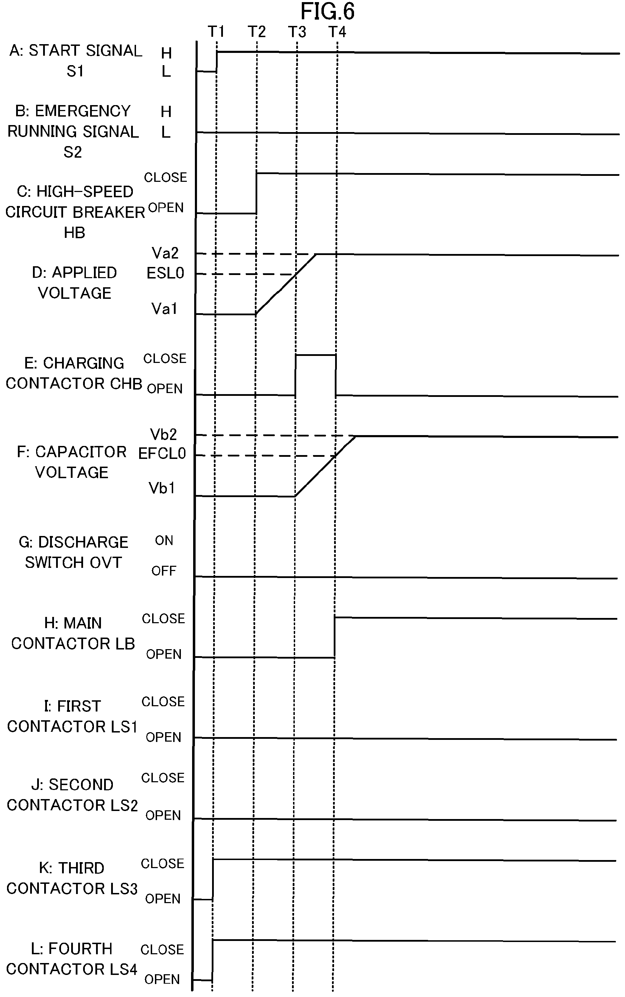

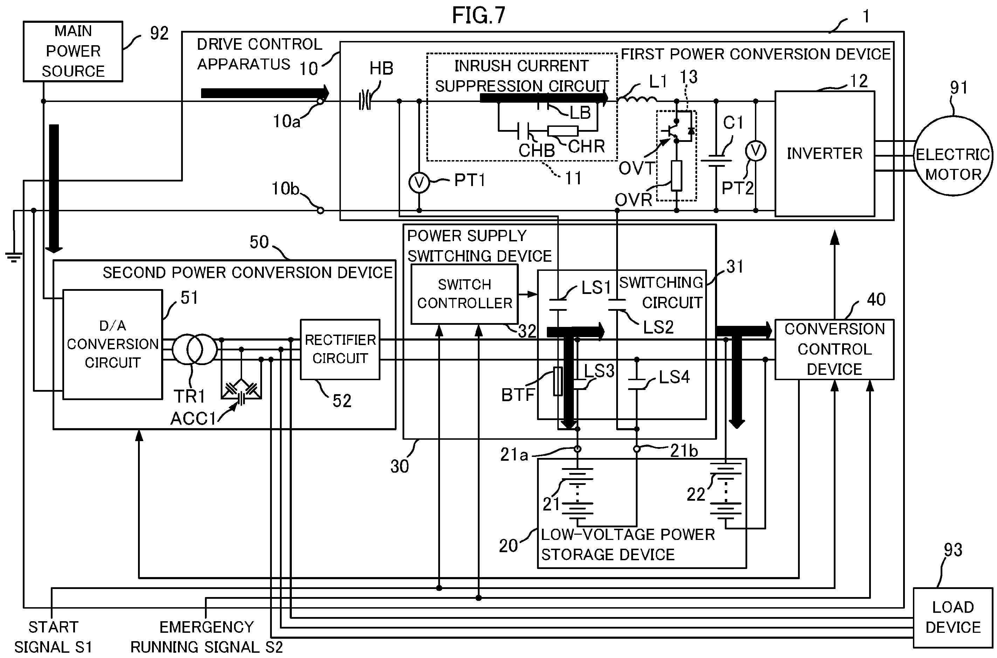

The drive of the electric motor 91 performed by the drive control apparatus 1 with the above configuration is described using FIGS. 6 and 7. An example of the operation of the drive control apparatus 1 when power is supplied from the main power source 92 to the first power conversion device 10 and the second power conversion device 50 is illustrated in FIG. 6. As illustrated in graph A of FIG. 6, the timing at which the start signal S1 transitions from the L level to the H level is defined as time T1. In the example of FIG. 6, as illustrated in graph B, the emergency running signal S2 is maintained at the L level, and emergency running is not conducted. During the period when no emergency running is conducted, as illustrated in graph G, the discharge switch OVT is maintained in the off state.

Before time T1, the railway vehicle is not started up, and the high-speed circuit breaker HB, the main contactor LB, the charging contactor CHB, the first contactor LS1, the second contactor LS2, the third contactor LS3, and the fourth contactor LS4 are all open. Therefore, before time T1, the first power conversion device 10, the second power conversion device 50, the electric motor 91, and the load device 93 are not supplied with power and remain in a stopped state.

At time T1, when the start signal S1 transitions from the L level to the H level, as illustrated in graphs I, J, K, and L of FIG. 6, the switch controller 32 maintains the first contactor LS1 and the second contactor LS2 in an open state and closes the third contactor LS3 and the fourth contactor LS4. As a result, the first battery module 21 of the low-voltage power storage device 20 is electrically connected to the second power conversion device 50 and the conversion control device 40 while being electrically disconnected from the first power conversion device 10.

Subsequently, as illustrated in graph C of FIG. 6, the time at which the breaker controller 43 of the first controller 41 in the conversion control device 40 closes the high-speed circuit breaker HB is defined as time T2. When the high-speed circuit breaker HB is closed, DC power is supplied from the main power source 92 to the first power conversion device 10. As a result, as illustrated in graph D of FIG. 6, at time T2, the voltage applied to the first power conversion device 10, as indicated by the measurement value of the voltage sensor PT1, begins to rise from the voltage value Va1. The voltage value Va1 is considered to be 0 V. The time at which the voltage applied to the first power conversion device 10 reaches a normal minimum applied voltage ESLO is defined as time T3. Here, the normal minimum applied voltage ESLO is the lower limit of the applied voltage needed to drive the electric motor 91 when power is supplied from the main power source 92 to the first power conversion device 10. On and after time T3, the voltage applied to the first power conversion device 10 is assumed to rise to the voltage value Va2. The voltage value Va2 is a value that can be considered to correspond to an overhead line voltage.

As illustrated in graph E of FIG. 6, the contactor controller 44 of the first controller 41 in the conversion control device 40 closes the charging contactor CHB when the measurement value of the voltage sensor PT1, indicating a value of the voltage applied to the first power conversion device 10, reaches the normal minimum applied voltage ESLO at time T3. When the charging contactor CHB is closed, current flows from the main power source 92 through the high-speed circuit breaker HB, the charging contactor CHB, and the charging resistor CHR to the capacitor C1, thereby suppressing flowing of inrush current to the capacitor C1.

When the charging contactor CHB is closed and current flows as described above, the charging of the capacitor C1 begins. As illustrated in graph F of FIG. 6, at time T3, the voltage across the terminals of the capacitor C1, as indicated by the measurement value of the voltage sensor PT2, begins to rise from the voltage value Vb1. The voltage value Vb1 is a value that can be considered to be a value indicating that the capacitor C1 has been discharged, such as 0 V. The time at which a difference between the voltage across the terminals of the capacitor C1 and the voltage applied to the first power conversion device 10 becomes equal to or less than the upper limit of the voltage difference that can be considered to indicate that the capacitor C1 is sufficiently charged is defined as time T4. The voltage across the terminals of the capacitor C1 at this time is referred to as EFCL0. On and after time T4, the voltage across the terminals of the capacitor C1 is assumed to rise to the voltage value Vb2.

As illustrated in graphs E and H of FIG. 6, the contactor controller 44 of the first controller 41 closes the main contactor LB and opens the charging contactor CHB when the difference between the voltage across the terminals of the capacitor C1 and the voltage applied to the first power conversion device 10 becomes equal to or less than the upper limit. As a result, current flows to the capacitor C1 from the main power source 92 via the high-speed circuit breaker HB and the main contactor LB.

On and after time T4, when the voltage across the terminals of the capacitor C1, indicated by the measurement value of the voltage sensor PT2, reaches the voltage EFCL0, the switching controller 46 of the first controller 41 in the conversion control device 40 generates pulse width modulation signals for the respective switching elements of the inverter 12 in response to the operation command signal.

Specifically, the switching controller 46 determines a torque command value τ*, which is a target torque of the electric motor 91, based on the target acceleration indicated by the operation command signal and the measurement value of the rotational speed of the electric motor 91 acquired from a non-illustrated speed sensor. The switching controller 46 determines an excitation current command value id* and a torque current command value iq* based on the torque command value τ*.

The switching controller 46 calculates the excitation current value id and the torque current value iq by performing transformation from three-phase coordinates to dq rotation coordinates, based on the estimated position θ of a rotor of the electric motor 91 obtained by integrating the measurement value of the rotational speed of the electric motor 91, and the phase currents of the electric motor 91 acquired from a non-illustrated current sensor. The switching controller 46 determines an excitation voltage command value Vd_{*} based on a difference between an excitation current value id and the excitation current command value id*, and determines a torque voltage command value Vq* based on a difference between the torque current value iq and the torque current command value iq*.

The switching controller 46 converts an excitation voltage command value Vd* and the torque voltage command value Vq* from the dq rotation coordinates to three-phase coordinates based on the estimated position θ, determines a U-phase voltage command value Vu, a V-phase voltage command value Vv, and a W-phase voltage command value Vw, and generates sinusoidal waves for each phase indicating the U-phase voltage command value Vu, the V-phase voltage command value Vv, and the W-phase voltage command value Vw. The switching controller 46 generates pulse width modulation signals by comparing the triangular wave, which serves as a carrier wave, with the sinusoidal waves of the respective phases.

By the switching controller 46 sending the aforementioned pulse width modulation signals to the respective switching elements of the inverter 12 and controlling on/off of the respective switching elements, the DC power supplied from the main power source 92 to the inverter 12 is converted into three-phase AC power and the three-phase AC power is then supplied to the electric motor 91. As a result, the electric motor 91 is driven to generate propulsion for the railway vehicle.

Although omitted in FIG. 6, the second controller 42 included in the conversion control device 40 performs similar control to the first controller 41. Specifically, the second controller 42 closes the high-speed circuit breaker HB of the D/A conversion circuit 51 at time T2, closes the charging contactor CHB at time T3, and closes the main contactor LB and opens the charging contactor CHB at time T4. On and after time T4, the switching controller 46 of the second controller 42 controls the on/off of the switching elements of the inverter 12 in the D/A conversion circuit 51. The DC power supplied from the main power source 92 to the D/A conversion circuit 51 is thereby converted into AC power and the AC power is supplied to the load device 93 and the rectifier circuit 52. The rectifier circuit 52 then rectifies the AC power into DC power and the DC power is supplied to the low-voltage power storage device 20 and the conversion control device 40.

On and after time T4, as indicated by arrows in FIG. 7, power is supplied from the main power source 92 to the first power conversion device 10 and the second power conversion device 50. The first power conversion device 10 converts the DC power supplied from the main power source 92 into three-phase AC power and supplies the converted three-phase AC power to the main electric motor 91, thereby driving the main electric motor 91 to generate propulsion for the railway vehicle.

As indicated by the arrows in FIG. 7, the second power conversion device 50 converts the DC power supplied from the main power source 92 into AC power and supplies the converted AC power to the load device 93, thereby enabling the load device 93 to operate. The second power conversion device 50 converts the DC power supplied from the main power source 92 into low-voltage DC power and supplies the low-voltage DC power to the low-voltage power storage device 20 and the conversion control device 40. As a result, the first battery module 21 and the second battery module 22 of the low-voltage power storage device 20 are charged, thereby causing the conversion control device 40 to operate using the low-voltage DC power supplied by the second power conversion device 50.

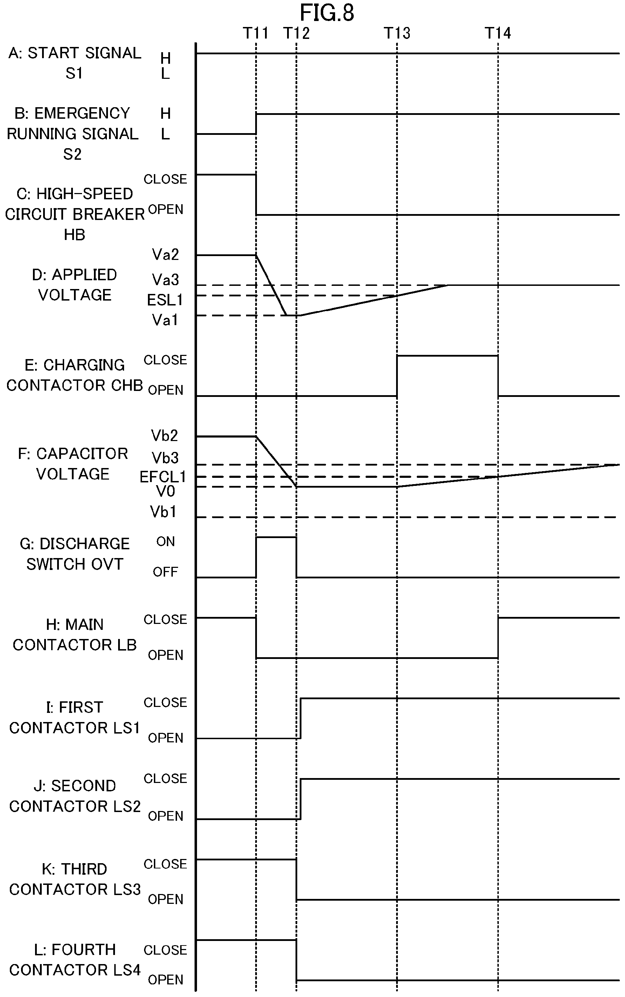

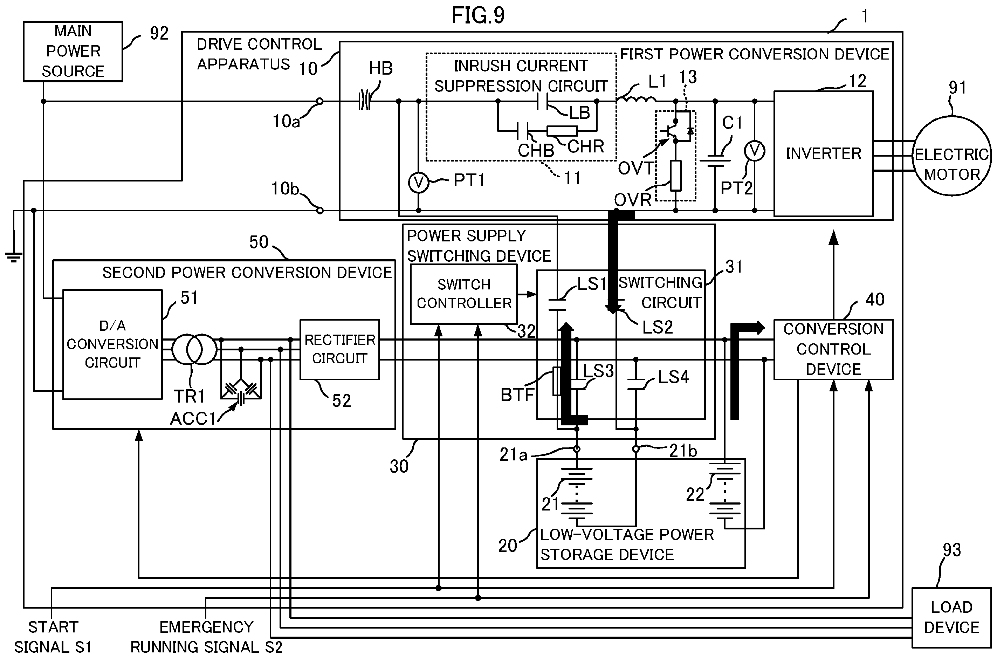

The operation of the drive control apparatus 1 when the railway vehicle runs through sections without electrification on and after time T4 in FIG. 6, such as non-electrified sections or from storage yards to electrified sections, is described using FIGS. 8 and 9. As illustrated in graph B of FIG. 8, the time at which the emergency running signal S2 transitions to the H level, for example, in response to operations on a monitoring device provided in the driver's cab, is defined as time T11.

When the emergency running signal S2 transitions to the H level at time T11, the breaker controller 43 of the first controller 41 in the conversion control device 40 opens the high-speed circuit breaker HB. As a result, as illustrated in graph D of FIG. 8, the voltage applied to the first power conversion device 10 begins to decrease from the voltage value Va2 at time T11.

At time T11, when the emergency running signal S2 transitions to the H level, the contactor controller 44 of the first controller 41 in the conversion control device 40 opens the closed main contactor LB, as illustrated in graph H of FIG. 8.

At time T11, when the emergency running signal S2 transitions to the H level, the switching controller 46 of the first controller 41 in the conversion control device 40 switches off the switching elements of the inverter 12 to stop the inverter 12. As a result, the power conversion performed by the first power conversion device 10 is stopped.

Although omitted in FIG. 8, when the emergency running signal S2 transitions to the H level at time T11, the second controller 42 in the conversion control device 40 performs operations similar to those of the first controller 41 described above. Specifically, at time T11, the breaker controller 43 of the second controller 42 in the conversion control device 40 opens the high-speed circuit breaker HB of the D/A conversion circuit 51, the contactor controller 44 of the second controller 42 opens the closed main contactor LB of the D/A conversion circuit 51, and the switching controller 46 of the second controller 42 switches off the switching elements of the inverter 12 in the D/A conversion circuit 51 to stop the inverter 12. As a result, the power conversion performed by the second power conversion device 50 is stopped.

At time T11, when the emergency running signal S2 transitions to the H level, as illustrated in graph F, the voltage across the terminals of the capacitor C1 is assumed to be the voltage value Vb2 that is higher than an emergency maximum terminal voltage V0 that is set lower than the discharge voltage of the low-voltage power storage device 20. When the voltage across the terminals of the capacitor C1 exceeds the emergency maximum terminal voltage V0 upon transition of the emergency running signal S2 to the H level, the discharge controller 45 of the first controller 41 in the conversion control device 40 switches on the discharge switch OVT after the switching controller 46 of the first controller 41 switches off each switching element of the inverter 12, as illustrated in graph G. As a result, as illustrated in graph F, the voltage across the terminals of the capacitor C1 starts to decrease from the voltage value Vb2 at time T11. The time at which the voltage across the terminals of the capacitor C1 subsequently reaches the emergency maximum terminal voltage V0 as illustrated in graph F is defined as time T12.

At time T12, when the voltage across the terminals of the capacitor C1 falls below the emergency maximum terminal voltage V0, in other words, when the capacitor C1 is discharged, the switch controller 32 of the power supply switching device 30 opens the third and fourth contactors LS3 and LS4, and then closes the first and second contactors LS1 and LS2, as illustrated in graphs I, J, K, and L. As a result, the first battery module 21 of the low-voltage power storage device 20 is electrically connected to the first power conversion device 10.

As indicated by arrows in FIG. 9, on and after time T12, DC power is supplied from the first battery module 21 to the first power conversion device 10, and DC power is supplied from the second battery module 22 to the conversion control device 40. As illustrated in graph D of FIG. 8, at time T12, when the first battery module 21 is electrically connected to the first power conversion device 10, the voltage applied to the first power conversion device 10 starts to rise from the voltage value Va1.

The time at which the voltage applied to the first power conversion device 10 reaches an emergency minimum applied voltage ESL1 is defined as time T13. Here, the emergency minimum applied voltage ESL1 is the lower limit of the applied voltage needed to drive the electric motor 91 during emergency running. The emergency minimum applied voltage ESL1 is set lower than the normal minimum applied voltage ESLO that is the lower limit of the voltage needed to drive the electric motor 91 when power is supplied from the main power source 92 to the first power conversion device 10. As a result, the first power conversion device 10 can operate using the DC power supplied from the low-voltage power storage device 20, which outputs power at a lower voltage than the main power source 92. On and after time T13, the voltage applied to the first power conversion device 10 rises to the voltage value Va3. The voltage value Va3 is lower than the voltage value Va2 corresponding to the overhead line voltage.

As illustrated in graph E, the contactor controller 44 of the first controller 41 in the conversion control device 40 closes the charging contactor CHB when the measurement value of the voltage sensor PT1, indicating the voltage applied to the first power conversion device 10, reaches the emergency minimum applied voltage ESL1 at time T13. When the charging contactor CHB is closed, current flows from the low-voltage power storage device 20 through the charging contactor CHB and the charging resistor CHR to the capacitor C1, thereby suppressing flowing of inrush current to the capacitor C1.

When the charging contactor CHB is closed and current flows as described above, the charging of the capacitor C1 begins. As illustrated in graph F, at time T13, the voltage across the terminals of the capacitor C1 starts to rise from the voltage value V0. The time at which a difference between the voltage across the terminals of the capacitor C1 and the voltage applied to the first power conversion device 10 becomes equal to or less than the upper limit of the voltage difference that can be considered to indicate that the capacitor C1 is sufficiently charged is defined as time T14. The voltage across the terminals of the capacitor C1 at this time is referred to as EFCL1. The upper limit of the voltage difference that can be considered to indicate that the capacitor C1 is sufficiently charged is set lower than the upper limit value of the voltage difference that can be considered to indicate that the capacitor C1 at the time when power is supplied from the main power source 92 to the first power conversion device 10 is sufficiently charged. On and after time T14, the voltage across the terminals of the capacitor C1 is assumed to rise to the voltage value Vb3.

As illustrated in graphs E and H of FIG. 8, the contactor controller 44 of the first controller 41 closes the main contactor LB and opens the charging contactor CHB when the difference between the voltage across the terminals of the capacitor C1 and the voltage applied to the first power conversion device 10 becomes equal to or less than the upper limit. As a result, current flows to the capacitor C1 from the low-voltage power storage device 20 through the main contactor LB.

When the voltage across the terminals of the capacitor C1 rises to the voltage value Vb3, the switching controller 46 of the first controller 41 in the conversion control device 40 sends pulse width modulation signals to the respective switching elements of the inverter 12 based on the operation command signal and switches the on/off of each switching element. The control of the switching elements of the inverter 12 by the switching controller 46 is similar to that in the example of FIG. 6. However, the amplitudes of the sinusoidal waves for each wave indicating the U-phase voltage command value Vu, the V-phase voltage command value Vv, and the W-phase voltage command value Vw are larger when power is supplied from the low-voltage power storage device 20 to the first power conversion device 10 than when power is supplied from the main power source 92 to the first power conversion device 10. In other words, a modulation factor of the pulse width modulation signal is higher when power is supplied from the low-voltage power storage device 20 to the first power conversion device 10 than when power is supplied from the main power source 92 to the first power conversion device 10. As a result, the pulse width of the pulse width modulation signal is wider than a pulse width when power is supplied from the main power source 92 to the first power conversion device 10, thereby enabling the electric motor 91 to rotate at a speed sufficient to generate propulsion for the railway vehicle even when the voltage of the DC power supplied to the inverter 12 is low.

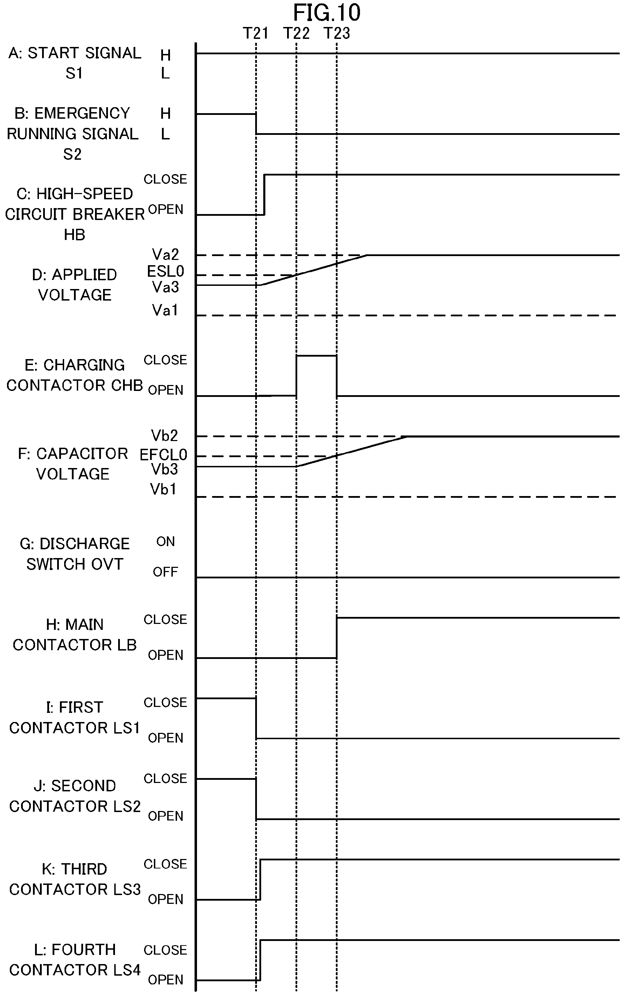

The operation of the drive control apparatus 1 when the railway vehicle reaches an electrified section on and after time T14 in FIG. 8 is described using FIG. 10. As illustrated in graph B of FIG. 10, the time at which the railway vehicle reaches the electrified section and the emergency running signal S2 transitions to the L level via operations on the monitoring device provided in the driver's cab is defined as time T21.

At time T21, when the emergency running signal S2 transitions to the L level, as illustrated in graphs I, J, K, and L, the switch controller 32 of the power supply switching device 30 opens the first contactor LS1 and the second contactor LS2, and then closes the third contactor LS3 and the fourth contactor LS4. As a result, the first battery module 21 of the low-voltage power storage device 20 is electrically connected to the second power conversion device 50 and the conversion control device 40.

When the third contactor LS3 and the fourth contactor LS4 are closed, the breaker controller 43 of the first controller 41 in the conversion control device 40 closes the high-speed circuit breaker HB. For example, the breaker controller 43 closes the high-speed circuit breaker HB after passage of time necessary for opening of the first contactor LS1 and the second contactor LS2 and closing of the third contactor LS3 and the fourth contactor LS4 since the emergency running signal S2 transitions to the L level. As a result, as illustrated in graph D of FIG. 10, the voltage applied to the first power conversion device 10 begins to rise from the voltage value Va3. The time at which the voltage applied to the first power conversion device 10 reaches the normal minimum applied voltage ESLO that is the lower limit of the applied voltage needed to drive the electric motor 91 is defined as time T22. On and after time T22, the voltage applied to the first power conversion device 10 is assumed to rise to the voltage value Va2.

As illustrated in graph E of FIG. 10, the contactor controller 44 of the first controller 41 in the conversion control device 40 closes the charging contactor CHB when the measurement value of the voltage sensor PT1 indicating the voltage applied to the first power conversion device 10 reaches the normal minimum applied voltage ESLO at time T22. When the charging contactor CHB is closed, current flows from the main power source 92 through the high-speed circuit breaker HB, the charging contactor CHB, and the charging resistor CHR to the capacitor C1, thereby suppressing flowing of inrush current to the capacitor C1.

When the charging contactor CHB is closed and current flows as described above, the charging of the capacitor C1 begins. As illustrated in graph F of FIG. 10, at time T22, the voltage across the terminals of the capacitor C1 starts to rise from the voltage value Vb3. The time at which the difference between the voltage across the terminals of the capacitor C1 and the voltage applied to the first power conversion device 10 becomes equal to or less than the upper limit of the voltage difference that can be considered to indicate that the capacitor C1 is sufficiently charged is defined as time T23. The voltage across the terminals of the capacitor C1 at this time is referred to as EFCL0. On and after time T23, the voltage across the terminals of the capacitor C1 is assumed to rise to the voltage value Vb2.

As illustrated in graphs E and H of FIG. 10, the contactor controller 44 of the first controller 41 closes the main contactor LB and opens the charging contactor CHB when the difference between the voltage across the terminals of the capacitor C1 and the voltage applied to the first power conversion device 10 becomes equal to or less than the upper limit. As a result, current flows to the capacitor C1 from the main power source 92 via the high-speed circuit breaker HB and the main contactor LB.

When the voltage across the terminals of the capacitor C1 rises to the voltage value Vb2, the switching controller 46 of the first controller 41 in the conversion control device 40 generates pulse width modulation signals for the respective switching elements of the inverter 12 based on the operation command.

By the switching controller 46 sending the aforementioned pulse width modulation signals to the respective switching elements of the inverter 12 and controlling on/off of the respective switching elements, the DC power supplied from the main power source 92 to the inverter 12 is converted into three-phase AC power and the three-phase AC power is then supplied to the electric motor 91. As a result, the electric motor 91 is driven to generate propulsion for the railway vehicle.

Although omitted in FIG. 10, the second controller 42 in the conversion control device 40 performs control similar to that of the first controller 41. Specifically, the second controller 42 closes the high-speed circuit breaker HB when the third contactor LS3 and the fourth contactor LS4 are closed, closes the charging contactor CHB at time T22, and closes the main contactor LB and opens the charging contactor CHB at time T23.

On and after time T23, as in FIG. 7, power is supplied from the main power source 92 to the first power conversion device 10 and the second power conversion device 50. The first power conversion device 10 converts the DC power supplied from the main power source 92 into three-phase AC power and supplies the converted three-phase AC power to the main electric motor 91, thereby driving the main electric motor 91 to generate propulsion for the railway vehicle.

As described above, according to the power supply switching device 30 included in the drive control apparatus 1 according to Embodiment 1, the first power conversion device 10 and the low-voltage power storage device 20 are electrically connected during emergency running, and DC power is supplied from the low-voltage power storage device 20 to the first power conversion device 10. As a result, even when power supply from the main power source 92 to the first power conversion device 10 is stopped, DC power supplied from the low-voltage power storage device 20 is converted into three-phase AC power and the three-phase AC power is supplied to the electric motor 91, thereby generating propulsion for the railway vehicle. The low-voltage power storage device 20 serves as a low-voltage power source for controlling the first power conversion device 10 through the conversion control device 40, thus enabling use of a compact power storage device as the low-voltage power storage device 20. Therefore, according to the power supply switching device 30 and the drive control apparatus 1 of Embodiment 1, the railway vehicle can run using the compact low-voltage power storage device 20 even when power supply from the main power source 92 is stopped.

### Embodiment 2

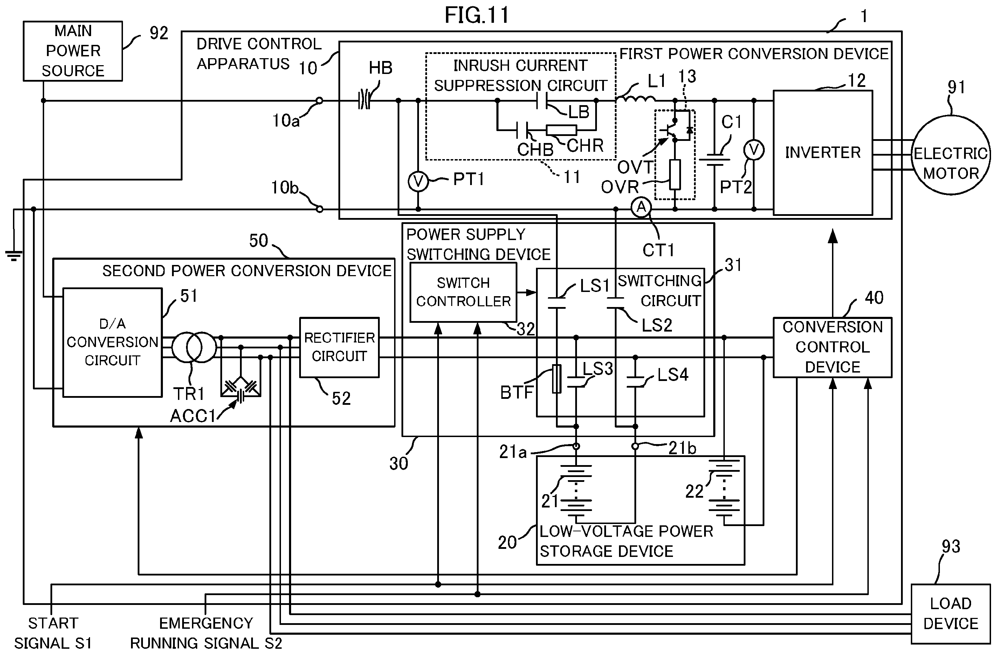

The drive control apparatus 1 may include a function to protect the inverter 12 in case of abnormalities such as grounding faults, overvoltage, or overcurrent occurring in the inverter 12. The drive control apparatus 1 having a function to protect the inverter 12 is described in Embodiment 2. As illustrated in FIG. 11, the first power conversion device 10 in the drive control apparatus 1 is provided with a current sensor CT1 that measures a value of current flowing through the first power conversion device 10, as a current acquirer to measure a value of current flowing through the first power conversion device 10. For example, the current sensor CT1 is provided in the electrical path between a negative side terminal among the primary terminals of the inverter 12 and the second contactor LS2.

The first controller 41 of the conversion control device 40 performs a protective operation for the inverter 12 in the first power conversion device 10. Similarly, the second controller 42 of the conversion control device 40 performs a protective operation for the inverter 12 of the D/A conversion circuit 51 in the second power conversion device 50. Since the configurations of the first controller 41 and the second controller 42 are similar, the details of the first controller 41 are described.

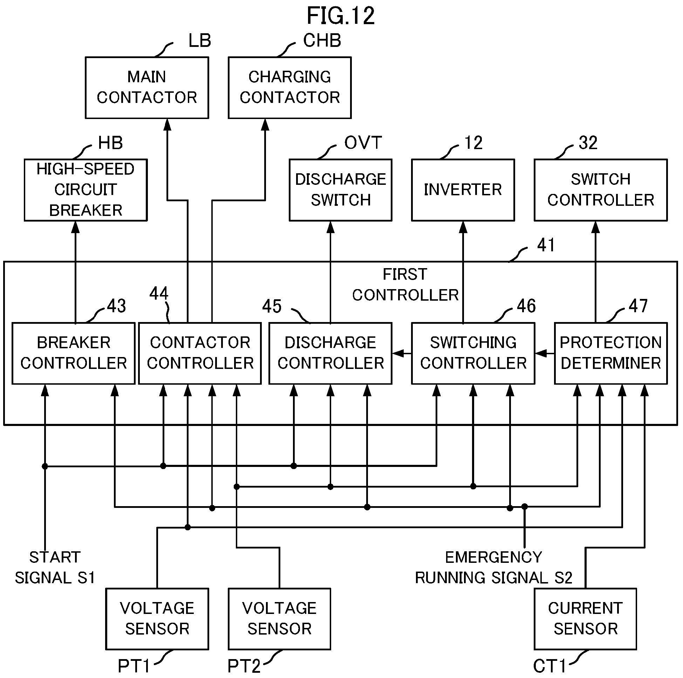

As illustrated in FIG. 12, in addition to the configuration of the first controller 41 according to Embodiment 1, the first controller 41 includes a protection determiner 47 that determines whether the protection of the inverter 12 is necessary. The protection determiner 47 acquires the measurement value of the voltage sensor PT1, the measurement value of the voltage sensor PT2, the measurement value of the current sensor CT1, and the emergency running signal S2. Based on at least one of the measurement value of the voltage sensor PT1, the measurement value of the voltage sensor PT2, or the measurement value of the current sensor CT1, the protection determiner 47 determines whether the protection of the inverter 12 is necessary. When determination is made that the protection is necessary, the protection determiner 47 sends a signal instructing protection to the switching controller 46 and the switch controller 32.

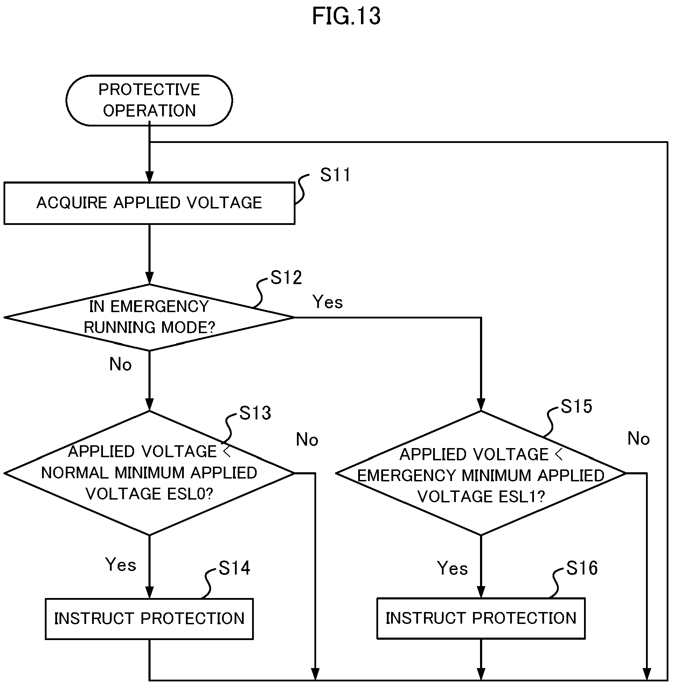

An example of the protective operation for the inverter 12 in the first power conversion device 10, performed by the conversion control device 40, is described using FIG. 13. When the inverter 12 starts operating under the control of the switching controller 46, the protection determiner 47 starts a process for the protective operation illustrated in FIG. 13.

The protection determiner 47 acquires from the voltage sensor PT1 a measurement value indicating a value of the voltage applied to the first power conversion device 10 (step S11). When the emergency running signal is at the L level, that is, when not in emergency running mode (No in step S12), the protection determiner 47 determines whether the applied voltage to the first power conversion device 10 acquired in step S11 is below the normal minimum applied voltage ESLO, which is the lower limit of the applied voltage needed to drive the electric motor 91 when power is supplied from the main power source 92 to the first power conversion device 10 (step S13).

When the applied voltage to the first power conversion device 10 acquired in step S11 is below the normal minimum applied voltage ESLO (Yes in step S13), the protection determiner 47 determines that the protection of the inverter 12 is necessary, and sends a signal instructing protection to the switching controller 46 and the switch controller 32 (step S14).

When the applied voltage to the first power conversion device 10 acquired in step S11 is equal to or greater than the normal minimum applied voltage ESLO (No in step S13), the processing in step S14 is not performed.

When the emergency running signal is at the H level, that is, when in the emergency running mode (Yes in step S12), the protection determiner 47 determines whether the applied voltage to the first power conversion device 10 acquired in step S11 is below the emergency minimum applied voltage ESL1 that is the lower limit of the applied voltage needed to drive the electric motor 91 during emergency running (step S15). Similar to Embodiment 1, the emergency minimum applied voltage ESL1 is set lower than the normal minimum applied voltage ESLO.

When the applied voltage to the first power conversion device 10 acquired in step S11 is below the emergency minimum applied voltage ESL1 (Yes in step S15), the protection determiner 47 determines that the protection of the inverter 12 is necessary, and sends a signal instructing protection to the switching controller 46 and the switch controller 32 (step S16).

When the applied voltage to the first power conversion device 10 acquired in step S11 is equal to or greater than the emergency minimum applied voltage ESL1 (No in step S15), the processing in step S16 is not performed.

While the inverter 12 is operating under the control of the switching controller 46, the protection determiner 47 repeats the above-described processing.

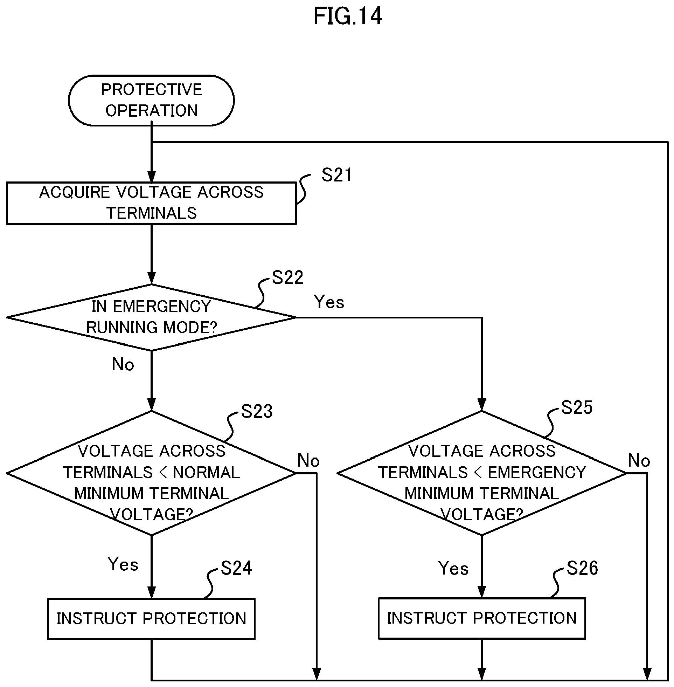

Another example of the protective operation for the inverter 12 in the first power conversion device 10, performed by the conversion control device 40, is described using FIG. 14. When the inverter 12 starts operating under the control of the switching controller 46, the protection determiner 47 starts a process for the protective operation illustrated in FIG. 14.

The protection determiner 47 acquires the measurement value from the voltage sensor PT2 that measures the voltage across the terminals of the capacitor C1 (step S21). When the emergency running signal is at the L level, that is, when not in the emergency running mode (No in step S22), the protection determiner 47 determines whether the voltage across the terminals of the capacitor C1 acquired in step S21 is below the normal minimum terminal voltage that is the lower limit of the voltage across the terminals of the capacitor C1 needed to drive the electric motor 91 when power is supplied from the main power source 92 to the first power conversion device 10 (step S23).

When the voltage across the terminals of the capacitor C1 acquired in step S21 is below the normal minimum terminal voltage (Yes in step S23), the protection determiner 47 determines that the protection of the inverter 12 is necessary, and sends a signal instructing protection to the switching controller 46 and the switch controller 32 (step S24).

When the voltage across the terminals of the capacitor C1 acquired in step S21 is equal to or greater than the normal minimum terminal voltage (No in step S23), the processing in step S24 is not performed.

When the emergency running signal is at the H level, that is, when in the emergency running mode (Yes in step S22), the protection determiner 47 determines whether the voltage across the terminals of the capacitor C1 acquired in step S21 is below the emergency minimum terminal voltage that is the lower limit of the voltage across the terminals of the capacitor C1 needed to drive the electric motor 91 during emergency running (step S25). The emergency minimum terminal voltage is set lower than the normal minimum terminal voltage.

When the voltage across the terminals of the capacitor C1 acquired in step S21 is below the emergency minimum terminal voltage (Yes in step S25), the protection determiner 47 determines that the protection of the inverter 12 is necessary, and sends a signal instructing protection to the switching controller 46 and the switch controller 32 (step S26).

When the voltage across the terminals of the capacitor C1 acquired in step S21 is equal to or greater than the emergency minimum terminal voltage (No in step S25), the processing in step S26 is not performed.

While the inverter 12 is operating under the control of the switching controller 46, the protection determiner 47 repeats the above-described processing.

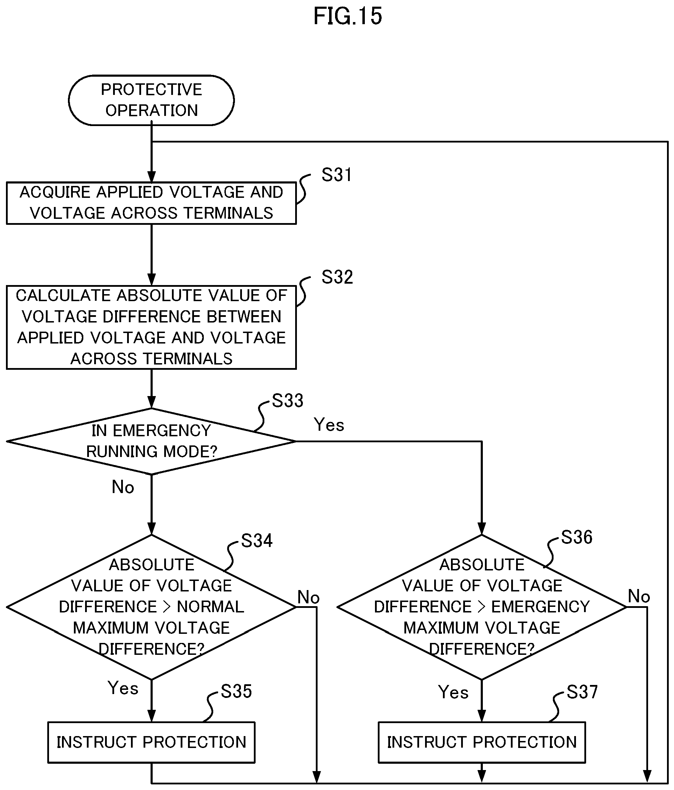

Another example of the protective operation for the inverter 12 in the first power conversion device 10, performed by the conversion control device 40, is described using FIG. 15. When the inverter 12 starts operating under the control of the switching controller 46, the protection determiner 47 starts a process for the protective operation illustrated in FIG. 15.

The protection determiner 47 acquires from the voltage sensor PT1 a measurement value indicating a value of the applied voltage to the first power conversion device 10, and from the voltage sensor PT2 a measurement value indicating the voltage across the terminals of the capacitor C1 (step S31). The protection determiner 47 calculates an absolute value of the voltage difference between the applied voltage to the first power conversion device 10 and the voltage across the terminals of the capacitor C1 (step S32).

When the emergency running signal is at the L level, that is, when not in the emergency running mode (No in step S33), the protection determiner 47 determines whether the absolute value of the voltage difference calculated in step S32 exceeds a normal maximum voltage difference that is the upper limit of the absolute value of the voltage difference between the applied voltage and the voltage across the terminals that allows the electric motor 91 to be driven when power is supplied from the main power source 92 to the first power conversion device 10 (step S34).

When the absolute value of the voltage difference calculated in step S32 exceeds the normal maximum voltage difference (Yes in step S34), the protection determiner 47 determines that the protection of the inverter 12 is necessary, and sends a signal instructing protection to the switching controller 46 and the switch controller 32 (step S35).

When the absolute value of the voltage difference calculated in step S32 is equal to or less than the normal maximum voltage difference (No in step S34), the processing in step S35 is not performed.

When the emergency running signal is at the H level, that is, when in the emergency running mode (Yes in step S33), the protection determiner 47 determines whether the absolute value of the voltage difference calculated in step S32 exceeds an emergency maximum voltage difference that is the upper limit of the absolute value of the voltage difference between the applied voltage and the voltage across the terminals that allows the electric motor 91 to be driven during emergency running (step S36). The emergency maximum voltage difference is set lower than the normal maximum voltage difference.

When the absolute value of the voltage difference calculated in step S32 exceeds the emergency maximum voltage difference (Yes in step S36), the protection determiner 47 determines that the protection of the inverter 12 is necessary, and sends a signal instructing protection to the switching controller 46 and the switch controller 32 (step S37).

When the absolute value of the voltage difference calculated in step S32 is equal to or less than the emergency maximum voltage difference (No in step S36), the processing in step S37 is not performed.

While the inverter 12 is operating under the control of the switching controller 46, the protection determiner 47 repeats the above-described processing.

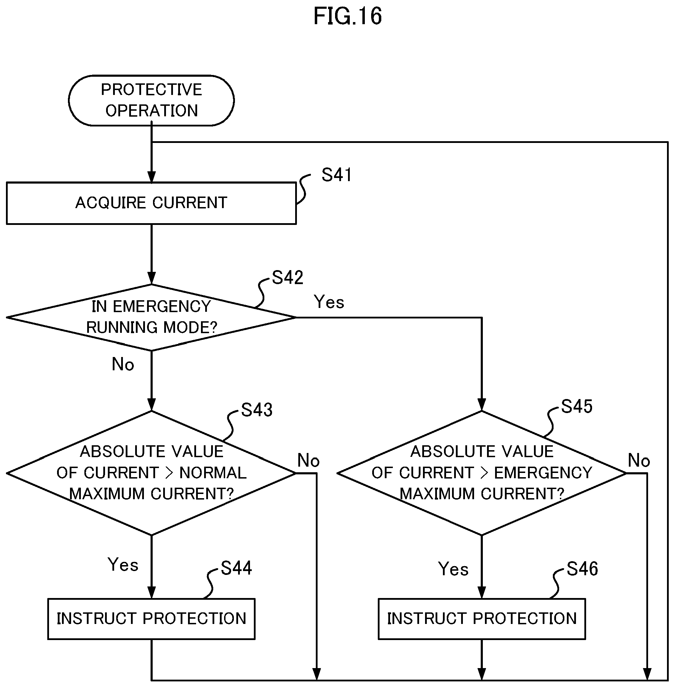

Another example of the protective operation for the inverter 12 in the first power conversion device 10, performed by the conversion control device 40, is described using FIG. 16. When the inverter 12 starts operating under the control of the switching controller 46, the protection determiner 47 starts a process for the protective operation illustrated in FIG. 16.

The protection determiner 47 acquires a measurement value from the current sensor CT1 that measures the current flowing through the first power conversion device 10 (step S41). When the emergency running signal is at the L level, that is, when not in the emergency running mode (No in step S42), the protection determiner 47 determines whether the measurement value by the current sensor CT1 acquired in step S41 exceeds a normal maximum current that is the upper limit of the absolute value of current flowing through the first power conversion device 10 when power is supplied from the main power source 92 to the first power conversion device 10 (step S43).

When the absolute value of the current acquired in step S41 exceeds the normal maximum current (Yes in step S43), the protection determiner 47 determines that the protection of the inverter 12 is necessary, and sends a signal instructing protection to the switching controller 46 and the switch controller 32 (step S44).

When the absolute value of the current acquired in step S41 is equal to or less than the normal maximum current (No in step S43), the processing in step S44 is not performed.

When the emergency running signal is at the H level, that is, when in the emergency running mode (Yes in step S42), the protection determiner 47 determines whether the measurement value of the current acquired in step S41 exceeds an emergency maximum current that is the upper limit of the current flowing in the first power conversion device 10 during emergency running (step S45). The emergency maximum current is set lower than the normal maximum current.

When the measurement value of the current acquired in step S41 exceeds the emergency maximum current (Yes in step S45), the protection determiner 47 determines that the protection of the inverter 12 is necessary, and sends a signal instructing protection to the switching controller 46 and the switch controller 32 (step S46).

When the measurement value of the current acquired in step S41 is equal to or less than the emergency maximum current (No in step S45), the processing in step S46 is not performed.

While the inverter 12 is operating under the control of the switching controller 46, the protection determiner 47 repeats the above-described processing.

As a result of the protective operation by the protection determiner 47 illustrated in FIGS. 13-16, the switching controller 46, upon receiving the signal instructing protection, switches off the respective switching elements of the inverter 12. As a result, the first power conversion device 10 is stopped.

When the protective operation to stop the first power conversion device 10 as described above is performed with the first power conversion device 10 and the low-voltage power storage device 20 electrically connected to each other, the switch controller 32 electrically disconnects the first power conversion device 10 from the low-voltage power storage device 20. Specifically, in a case where the first contactor LS1 and the second contactor LS2 are closed, the switch controller 32, upon receiving the signal instructing protection, opens the first contactor LS1 and the second contactor LS2. As a result, the first battery module 21 of the low-voltage power storage device 20 is disconnected from the first power conversion device 10, thereby suppressing abnormal conditions such as overcurrent or overvoltage in the first battery module 21 of the low-voltage power storage device 20 when an abnormality occurs in the first power conversion device 10.

The protection determiner 47 of the second controller 42 performs the processing similar to the protection determiner 47 of the first controller 41. However, since the second power conversion device 50 is stopped during emergency running, the protection determiner 47 of the second controller 42 does not perform the emergency running operations in FIGS. 13 to 16, specifically the processing of steps S15 and S16 in FIG. 13, steps S25 and S26 in FIG. 14, steps S36 and S37 in FIG. 15, and steps S45 and S46 in FIG. 16.

When the protective operation to stop the second power conversion device 50 as described above is performed with the second power conversion device 50 and the low-voltage power storage device 20 electrically connected to each other, the switch controller 32 electrically disconnects the second power conversion device 50 from the low-voltage power storage device 20. Specifically, in a case where third contactor LS3 and the fourth contactor LS4 are closed, the switch controller 32, upon receiving the signal instructing protection, opens the third contactor LS3 and the fourth contactor LS4. As a result, the first battery module 21 of the low-voltage power storage device 20 is disconnected from the second power conversion device 50, thereby suppressing abnormal conditions such as overcurrent or overvoltage in the first battery module 21 of the low-voltage power storage device 20 when an abnormality occurs in the second power conversion device 50.

As described above, the drive control apparatus 1 according to Embodiment 2 performs the protective operation for the inverter 12 in the first power conversion device 10 in both cases where power is supplied from the main power source 92 to the first power conversion device 10 and where power is supplied from the low-voltage power storage device 20 to the first power conversion device 10. Similarly, the drive control apparatus 1 performs the protective operation for the inverter 12 of the D/A conversion circuit 51 in the second power conversion device 50 when power is supplied from the main power source 92 to the first power conversion device 10 and the second power conversion device 50. As a result, protection of the inverter 12 is enabled in case of an abnormality occurring in the inverter 12.

The present disclosure is not limited to the above-described embodiments. The circuit configurations described above are merely examples. As an example, the switching circuit 31 may include either the first contactor LS1 or the second contactor LS2. Similarly, the switching circuit 31 may include either the third contactor LS3 or the fourth contactor LS4.

The circuit configuration of the inrush current suppression circuit 11 is not limited to the above example. The main contactor LB may be connected in series with the charging contactor CHB, and the charging resistor CHR may be provided in parallel with the charging contactor CHB. In this case, the contactor controller 44 may open the charging contactor CHB after the capacitor C1 is sufficiently charged after closing of both the main contactor LB and the charging contactor CHB.

The drive control apparatus 1 may be mounted on a railway vehicle using an AC electrification system. In such a case where the drive control apparatus 1 is mounted on the railway vehicle using the AC electrification system, the drive control apparatus 1 may receive DC power converted by a converter from collected power supplied by a current collector and stepped down by a high-voltage transformer. At this time, a high-speed circuit breaker may be provided between the primary winding of the high-voltage transformer and the current collector instead of the high-speed circuit breaker HB provided in the first power conversion device 10.

The control of the first power conversion device 10 and the second power conversion device 50 by the first controller 41 and the second controller 42 is not limited to the examples described above. As an example, when the emergency running signal S2 transitions to the H level, the brake controller 43 may open the high-speed circuit breaker HB after the contactor controller 44 opens the main contactor LB, or the contactor controller 44 may open the main contactor LB after the breaker controller 43 opens the high-speed circuit breaker HB. Alternatively, when the emergency running signal S2 transitions to the H level, the breaker controller 43 and the contactor controller 44 may simultaneously open the high-speed circuit breaker HB and the main contactor LB, respectively.

A contactor may be provided between the second battery module 22 and the point of connection between the second power conversion device 50 and the conversion control device 40. The contactor may be closed, for example, when using the second battery module 22 as the power supply for the conversion control device 40, such as during the startup of a railway vehicle.

The circuit configuration of the switching circuit 31 is not limited to the above examples. As an example, the circuit configuration may include a disconnect switch, semiconductor elements, and the like, instead of the first contactor LS1, the second contactor LS2, the third contactor LS3, and the fourth contactor LS4.

The control of the switching circuit 31 by the switch controller 32 is not limited to the examples described above. As an example, at time T12 after the emergency running signal transitions to the H level at time T11 in FIG. 8, the switch controller 32 may perform closing of the first and second contactors LS1 and LS2 and opening of the third and fourth contactors LS3 and LS4 simultaneously.

The position of the current sensor CT1 is not limited to the above examples. The current sensor CT1 may be provided at any position capable of measuring a value of the current flowing through the first power conversion device 10, in both cases where power is supplied from the main power source 92 to the first power conversion device 10 and where power is supplied from the low-voltage power storage device 20 to the first power conversion device 10. As an example, the current sensor CT1 may be provided between the output side of the inrush current suppression circuit 11 and the reactor L1.

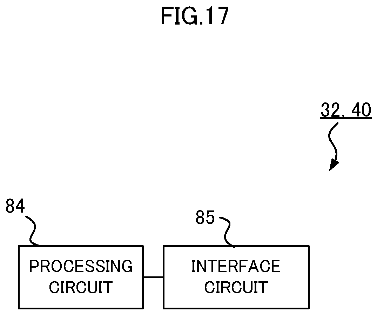

The hardware configuration of the switch controller 32 and the conversion control device 40 is not limited to the examples described above. An example variation of the hardware configuration for the switch controller 32 and the conversion control device 40 is illustrated in FIG. 17. As illustrated in FIG. 17, the switch controller 32 and the conversion control device 40 may be implemented using a processing circuit 84. The switch controller 32 is connected via an interface circuit 85 to the first contactor LS1, the second contactor LS2, the third contactor LS3, the fourth contactor LS4, and the voltage sensor PT2. The conversion control device 40 is connected via the interface circuit 85 to the high-speed circuit breaker HB, the main contactor LB, the charging contactor CHB, the discharge switch OVT, the inverter 12, the voltage sensors PT1 and PT2, and the current sensor CT1.

In the case where the processing circuit 84 is dedicated hardware, the processing circuit 84 is a single circuit, a combined circuit, a processor, an application specific integrated circuit (ASIC), a field programmable gate array (FPGA), or a combination thereof, for example. Each component of the switch controller 32 and the conversion control device 40 may be implemented using separate processing circuits 84 or a shared processing circuit 84.

Some of the functions of the switch controller 32 and the conversion control device 40 may be implemented by dedicated hardware, and other functions may be implemented by software or firmware. For instance, in the first controller 41 of the conversion control device 40 in the drive control apparatus 1 according to Embodiment 1, the breaker controller 43 and the contactor controller 44 may be implemented using the processing circuit 84 illustrated in FIG. 17, and the discharge controller 45 and the switching controller 46 may be implemented by the processor 81 illustrated in FIG. 5 reading and executing programs stored in the memory 82.

At least some of the switch controller 32 and the conversion control device 40 may be implemented as a function of a train information management system. The start signal S1 and the emergency running signal S2 may be supplied from the train information management system to the switch controller 32 and the conversion control device 40.

The drive control apparatus 1 is mounted on not only railway vehicles, and may also be mounted on any moving body that operates using externally supplied power, such as a trolleybus.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Reference Signs List

1 Drive control apparatus
10 First power conversion device
10a Positive input terminal
10b Negative input terminal
11 Inrush current suppression circuit
12 Inverter
13 Discharge circuit
20 Low-voltage power storage device
21 First battery module
21a Positive battery terminal
21b Negative battery terminal
22 Second battery module
30 Power supply switching device
31 Switching circuit
32 Switch controller
40 Conversion control device
41 First controller
42 Second controller
43 Breaker controller
44 Contactor controller
45 Discharge controller
46 Switching controller
47 Protection determiner
50 Second power conversion device
51 D/A conversion circuit
52 Rectifier circuit
80 Bus
81 Processor
82 Memory
83 Interface
84 Processing circuit
85 Interface circuit
91 Electric motor
92 Main power source
93 Load device
ACC1 AC capacitor
BTF Fuse
C1 Capacitor
CHB Charging contactor
CHR Charging resistor
CT1 Current sensor
HB High-speed circuit breaker
LB Main contactor
LS1 First contactor
LS2 Second contactor
LS3 Third contactor
LS4 Fourth contactor
OVR Discharge resistor
OVT Discharge switch
PT1, PT2 Voltage sensor
S1 Start signal
S2 Emergency running signal
TR1 Transformer

## Claims

1. A power supply switching device, comprising:
a switching circuit connected to a first power conversion device and a low-voltage power storage device and configured to form an electrical path between the first power conversion device and the low-voltage power storage device, the first power conversion device converting supplied power into power to be supplied to an electric motor that generates propulsion for a railway vehicle, the first power conversion device supplying the converted power to the electric motor, the low-voltage power storage device supplying power to a conversion control device that controls the first power conversion device and discharging at a voltage lower than applied voltage that is applied to the first power conversion device when power is supplied from a main power source to the first power conversion device; and
a switch controller to control the switching circuit to electrically disconnect the first power conversion device and the low-voltage power storage device from each other when power is supplied from the main power source to the first power conversion device and to control the switching circuit to electrically connect the first power conversion device and the low-voltage power storage device to each other when power supply from the main power source to the first power conversion device is stopped in a powered-on state of the railway vehicle.

2. The power supply switching device according to claim 1, wherein
the switching circuit includes at least one power supply contactor that is electrically connected to the first power conversion device and the low-voltage power storage device, and
the switch controller opens the power supply contactor when power is supplied from the main power source to the first power conversion device, and closes the power supply contactor when power supply from the main power source to the first power conversion device in the powered-on state of the railway vehicle.

3. The power supply switching device according to claim 2, wherein
the at least one power supply contactor includes a first contactor having one end connected to a positive input terminal that is a positive terminal on a main power source side of the first power conversion device and another end connected to a positive battery terminal of a first battery module included in the low-voltage power storage device.

4. The power supply switching device according to claim 3, wherein
the at least one power supply contactor further includes a second contactor having one end connected to a negative input terminal that is a negative terminal on the main power source side of the first power conversion device, and another end connected to a negative battery terminal of the first battery module.

5. The power supply switching device according to any one of claims 1 to 4, wherein
the switching circuit is electrically connected to the first power conversion device, the low-voltage power storage device, and a second power conversion device, the second power conversion device converting power supplied from the main power source into power to be supplied to the conversion control device and outputting the converted power to the conversion control device and the low-voltage power storage device, the switching circuit forming an electrical path between the first power conversion device and the low-voltage power storage device and an electrical path between the second power conversion device and the low-voltage power storage device, and
the switch controller electrically connects the second power conversion device and the low-voltage power storage device to each other when power is supplied from the main power source to the first power conversion device, and electrically disconnects the second power conversion device and the low-voltage power storage device from each other when power supply from the main power source to the first power conversion device is stopped in a powered-on state of the railway vehicle.

6. The power supply switching device according to claim 5, wherein
the switching circuit further includes at least one charging contactor that is electrically connected to the second power conversion device and the low-voltage power storage device, and
the switch controller closes the charging contactor when power is supplied from the main power source to the first power conversion device, and opens the charging contactor when power supply from the main power source to the first power conversion device is stopped in the powered-on state of the railway vehicle.

7. The power supply switching device according to claim 6, wherein
the at least one charging contactor includes a third contactor having one end connected to a positive output terminal that is an output side positive terminal of the second power conversion device, and another end connected to a positive battery terminal of the first battery module included in the low-voltage power storage device.

8. The power supply switching device according to claim 7, wherein
the at least one charging contactor further includes a fourth contactor having one end connected to a negative output terminal that is an output side negative terminal of the second power conversion device, and another end connected to a negative battery terminal of the first battery module.

9. The power supply switching device according to any one of claims 1 to 8, wherein
the switching circuit further includes a fuse provided in an electrical path between the first power conversion device and the low-voltage power storage device.

10. A drive control apparatus, comprising:
the power supply switching device according to any one of claims 1 to 9;
a first power conversion device connected to the power supply switching device and configured to convert supplied power into power to be supplied to an electric motor that generates propulsion for a railway vehicle, the first power conversion device supplying the converted power to the electric motor;
a conversion control device to control the first power conversion device by sending pulse width modulation signals to respective switching elements included in the first power conversion device; and
a low-voltage power storage device connected to the power supply switching device and configured to supply power to the conversion control device and discharge at a voltage lower than a voltage applied to the first power conversion device when power is supplied from the main power source to the first power conversion device, wherein
when the first power conversion device and the low-voltage power storage device are electrically connected to each other by the power supply switching device, the conversion control device sends, to the respective switching elements included in the first power conversion device, pulse width modulation signals with higher modulation factors than modulation factors when the first power conversion device and the low-voltage power storage device are electrically disconnected from each other and power is supplied from the main power source to the first power conversion device.

11. The drive control apparatus according to claim 10, wherein
the low-voltage power storage device includes a first battery module that is electrically connected to or electrically disconnected from the first power conversion device through control of the switching circuit by the switch controller, and the low-voltage power storage device supplies power stored in the first battery module to the first power conversion device when the first battery module is electrically connected to the first power conversion device.

12. The drive control apparatus according to claim 11, wherein
the first power conversion device includes a capacitor that is charged with power supplied from the main power source or the low-voltage power storage device, and a discharge circuit that includes a discharge resistor and a discharge switch connected in series with each other and connected in parallel with the capacitor,
in a case where a voltage across terminals of the capacitor exceeds an emergency maximum terminal voltage that is set lower than a discharge voltage of the low-voltage power storage device when power supply from the main power source to the first power conversion device is stopped in a powered-on state of the railway vehicle, the conversion control device discharges the capacitor by switching on the discharge switch to electrically connect the capacitor to the discharge resistor, and
after the capacitor is discharged, the switch controller controls the switching circuit to electrically connect the first power conversion device and the low-voltage power storage device to each other.

13. The drive control apparatus according to claim 12, wherein
when power is supplied from the low-voltage power storage device to the first power conversion device, the conversion control device performs a protective operation to stop the first power conversion device in a case where the voltage across the terminals of the capacitor is equal to or less than an emergency minimum terminal voltage that is set lower than the lower limit of the voltage across the terminals needed to drive the electric motor when power is supplied from the main power source to the first power conversion device.

14. The drive control apparatus according to claim 12 or 13, wherein
when power is supplied from the low-voltage power storage device to the first power conversion device, the conversion control device performs a protective operation to stop the first power conversion device in a case where an absolute value of a difference between the voltage applied to the first power conversion device and the voltage across the terminals of the capacitor exceeds an emergency maximum voltage difference that is set lower than an upper limit of an absolute value of a voltage difference between the applied voltage and the voltage across the terminals that allows the electric motor to be driven when power is supplied from the main power source to the first power conversion device.

15. The drive control apparatus according to any one of claims 10 to 14, further comprising:
a second power conversion device to convert, through control by the conversion control device, power supplied from the main power source into power to be supplied to the conversion control device, and output the converted power to the conversion control device and the low-voltage power storage device, wherein
the switching circuit included in the power supply switching device is electrically connected to the first power conversion device, the low-voltage power storage device, and the second power conversion device, and forms an electrical path between the first power conversion device and the low-voltage power storage device and an electrical path between the second power conversion device and the low-voltage power storage device, and
the low-voltage power storage device is charged with power output by the second power conversion device.

16. The drive control apparatus according to claim 15, wherein
the low-voltage power storage device includes a second battery module with both terminals connected to a positive power supply terminal and a negative power supply terminal of the conversion control device, and
the low-voltage power storage device supplies the power stored in the second battery module to the conversion control device when power supply from the second power conversion device to the conversion control device is stopped.

17. The drive control apparatus according to any one of claims 10 to 16, wherein
the conversion control device performs a protective operation to stop the first power conversion device when the applied voltage to the first power conversion device during power supply from the low-voltage power storage device to the first power conversion device is equal to or less than an emergency minimum applied voltage that is set lower than a lower limit of the applied voltage needed to drive the electric motor during power supply from the main power source to the first power conversion device.

18. The drive control apparatus according to any one of claims 10 to 17, wherein
when power is supplied from the low-voltage power storage device to the first power conversion device, the conversion control device performs a protective operation to stop the first power conversion device in a case where an absolute value of the current flowing through the first power conversion device is equal to or greater than an emergency maximum current that is set lower than an upper limit of the current flowing in the first power conversion device when power is supplied from the main power source to the first power conversion device.

19. The drive control apparatus according to any one of claims 13, 14, 17, and 18, wherein
when the protective operation by the conversion control device is performed with the first power conversion device and the low-voltage power storage device electrically connected, the switch controller electrically disconnects the first power conversion device from the low-voltage power storage device.
